# EUROPÄISCHE PATENTSCHRIFT

(11) **EP 0 712 744 B1**
(45) Veröffentlichungstag und Bekanntmachung des Hinweises auf die Patenterteilung: **21.10.1998**
(21) Anmeldenummer: 95112169.8
(22) Anmeldetag: 02.08.1995
(51) Int. Cl.: B60H 1/00

(54) **Fahrzeugheizung**
Vehicle heating
Chauffage de véhicule

(30) Priorität: 21.11.1994 DE 4441351
(43) Veröffentlichungstag der Anmeldung: 22.05.1996
(73) Patentinhaber: Bayerische Motoren Werke Aktiengesellschaft, 80788 München (DE)
(72) Erfinder: Bednarek, Henryk, D-86899 Landsberg (DE); Wagner, Berthold, D-82256 Fürstenfeldbruck (DE); Blüher, Peter, D-82041 Oberhaching (DE); Kazenwadel, Horst, D-80639 München (DE)

(56) Entgegenhaltungen:
- EP-A- 0 340 621
- DE-U- 9 202 466
- US-A- 4 338 891

## Beschreibung

Die Erfindung geht aus von einer Fahrzeugheizung, wie sie im Oberbegriff des ersten Anspruchs beschrieben ist und durch die EP-B 0 340 621 bekannt ist.

Der aus der EP-B 0 340 621 bekannte Heizungskreislauf mit einem Latentwärmespeicher zum motorunabhängigen Beheizen der Fahrgastzelle hat sich in der Praxis bewährt. Aufgrund der - im Gegensatz zu einer einfachen Heizungsanlage - zusätzlichen Schaltventile und Leitungen ist jedoch die Montage zeitaufwendig.

Aufgabe der vorliegenden Erfindung ist es, die Montagezeit für die zusätzlichen Bauteile zu verkürzen.

Erfindungsgemäß wird diese Aufgabe durch die kennzeichnenden Merkmale des ersten Anspruchs gelöst. Dadurch, daß die zusätzlichen Bauteile auf einem gemeinsamen Aggregateträger angeordnet sind, können die Ventile mit der Umwälzpumpe vormontiert werden, so daß die Montage wesentlich vereinfacht wird. Es sind dann nur noch die entsprechenden Leitung, nämlich die Vorlaufleitung des Heizungskreises einmal vom Motor kommend und zum anderen zum Heizungswärmetauscher verlaufend sowie die Vorlaufleitung des Latentwärmespeichers anzuschließen.

Weiter vereinfacht wird die Montage durch die Weiterbildung nach Anspruch 2, in dem auch die Bypass-Leitung auf den Aggregateträger mit aufgenommen wird.

Die Weiterbildung nach den Ansprüchen 3 - 5 beschreibt vorteilhafte Anbringungsmöglichkeiten, wobei das Anbringen des Aggregateträger außerhalb der Fahrgastzelle den Vorteil hat, daß im Fall einem Unfalls mit Beschädigung der Ventile die eventuell heiße Kühlflüssigkeit nicht in den Fahrgastraum eintritt.

Durch die Weiterbildung nach Anspruch 5, das Einklipsen in der Fahrzeug-Karosserie wird gleichzeitig eine schallentkoppelte Möglichkeit geschaffen, so daß auch von der Umwälzpumpe kein Körperschall in die Karosserie übertragen wird. Zudem ist dadurch die ganze Anordnung schwingungsgeschützt.

Im folgenden wird die Erfindung anhand eines bevorzugten Ausführungsbeispiels näher erläutert. Es stellen dar:
- Fig. 1: einen schematisierten Heizkreislauf mit einem Latentwärmespeicher;
- Fig. 2: eine kompakte Anordnung der Ventile mit Umwälzpumpe.

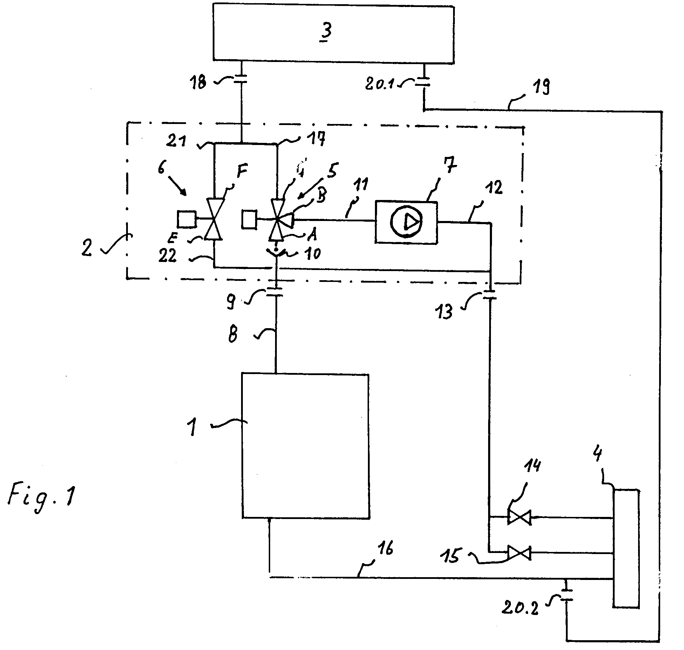

In Fig. 1 ist schematisiert ein Heizungskreislauf einer Brennkraftmaschine dargestellt. Hierbei ist mit 1 eine Brennkraftmaschine, mit 2 ein Aggregateträger, mit 3 ein Latentwärmespeicher und mit 4 ein Heizungswärmetauscher bezeichnet.

Auf dem Aggregateträger 2 ist ein elektrisch ansteuerbares 3-Wegeventil 5, ein elektrisch ansteuerbares 2-Wegeventil 6 sowie eine elektrisch betriebene Umwälzpumpe 7 angeordnet.

Wie aus der Abbildung ersichtlich, sind sämtliche Verbindungsleitungen zwischen den Ventilen 5 und 6 sowie der Umwälzpumpe 7 auf dem Aggregateträger 2 angeordnet.

Von der Brennkraftmaschine 1 führt eine Schlauchleitung 8 für in der Brennkraftmaschine erhitztes Kühlmittel unter Zwischenschaltung einer Schlauchkupplung 9 und eines Rückschlagventiles 10 zu dem Anschluß A des 3-Wegeventils 5. An dem Anschluß B des 3-Wegeventiles 5 ist eine Saugleitung 11 angeordnet, die zum Eingang der Umwälzpumpe 7 führt. Die Druckleitung 12 der Umwälzpumpe 7 führt unter Zwischenschaltung einer weiteren Schlauchkupplung 13 zu den beiden Heizungsventilen 14 und 15 und dann weiter zu dem Heizungswärmetauscher 4.

Von dem Heizungswärmetauscher 4 führt eine Rücklaufleitung 16 wieder zur Brennkraftmaschine 1.

An dem Anschluß C des 3-Wegeventiles 5 ist eine Leitung 17 angeschlossen, die unter Zwischenschaltung einer Schlauchkupplung 18 mit dem Latentwärmespeicher 3 verbunden ist.

Eine Leitung 19 verbindet den Latentwärmespeicher 3 mit der Rücklaufleitung 16, ebenfalls unter Zwischenschaltung zweier Schlauchkupplungen 20.1 und 20.2.

Das 2-Wegeventil 6 auf dem Aggregateträger 2 ist über eine Leitung 21 mit der Leitung 17 verbunden und andererseits über eine Bypass-Leitung 22 mit der Druckleitung 12. Die entsprechenden Ventilanschlüsse sind mit E und F bezeichnet.

Zur Heizung des Fahrgastinnenraumes bei stehender Brennkraftmaschine 1 und aufgeladenem Latentwärmespeicher 3 werden die Heizungsventile 14 und 15 geöffnet, das 2-Wegeventil 6 geschlossen und das 3-Wegeventil 5 vom Anschluß C zum Anschluß B geschaltet. Der Anschluß A ist ebenfalls gesperrt.

Wenn bei diesen Ventilstellungen die Umwälzpumpe 7 eingeschaltet wird, wird heißes Kühlmittel aus dem Latentwärmespeicher 3 über die Leitung 17, den Anschluß C, den Anschluß B und die Leitung 11 zur Umwälzpumpe 7 befördert. Von dort strömt es durch die Leitung 12, die Schlauchkupplung 13 über die Heizungsventile 14 und 15 in den Heizungswärmetauscher 4. Über die Leitung 16, die Schlauchkupplungen 20.2 und 20.1 und die Leitung 19 gelangt das im Heizungswärmetauscher 4 abgekühlte Kühlmittel zum Latentwärmespeicher 3 zurück, um dort wieder Wärme aufzunehmen.

Bei laufendem Motor und genügend heißem Kühlmittel übernimmt der Motor die Wärmelieferung für den Heizungswärmetauscher. Hierzu schaltet das 3-Wegeventil 5 den Anschluß A zum Anschluß B. Damit kann in der Brennkraftmaschine erhitztes Kühlmittel über die Vorlaufleitung 8, die Schlauchkupplung 9, das Rückschlagventil 10 in die Leitung 11 und von dort zur Umwälzpumpe 7 strömen. Es verläßt die Umwälzpumpe 7 über die Leitung 12, die Schlauchkupplung 13 und gelangt über die Heizungsventile 14 und 15 zum Wärmetauscher 4. Von dort fließt es über die Rücklaufleitung 16 zur Brennkraftmaschine 1 zurück.

Sobald von dem Kühlmittel der Brennkraftmaschine mehr Wärme dem Heizungswärmetauscher angeliefert wird als zur Aufrechterhaltung der Temperatur in der Fahrgastzelle notwendig ist, wird das 2-Wegeventil 6 geöffnet. Dadurch kann erhitztes Kühlmittel durch die Bypass-Leitung 22, den Anschluß E und den Anschluß F des Ventils 6 zur Leitung 21 fließen und von dort weiter zur Leitung 17 und über die Schlauchkupplung 18 zum Latentwärmespeicher 3, um dort die Speichermasse aufzuwärmen. Es verläßt dann abgekühlt den Latentwärmespeicher 3 über die Rücklaufleitung 19, die Schlauchkupplung 20.1 und gelangt über die Rücklaufleitung 16 zur Brennkraftmaschine 1.

Der zur Steuerung der Ventile und der Umwälzpumpe notwendige elektrische/elektronische Regelkreis ist hier nicht näher beschrieben, da sein spezieller Aufbau nicht Gegenstand der Erfindung ist.

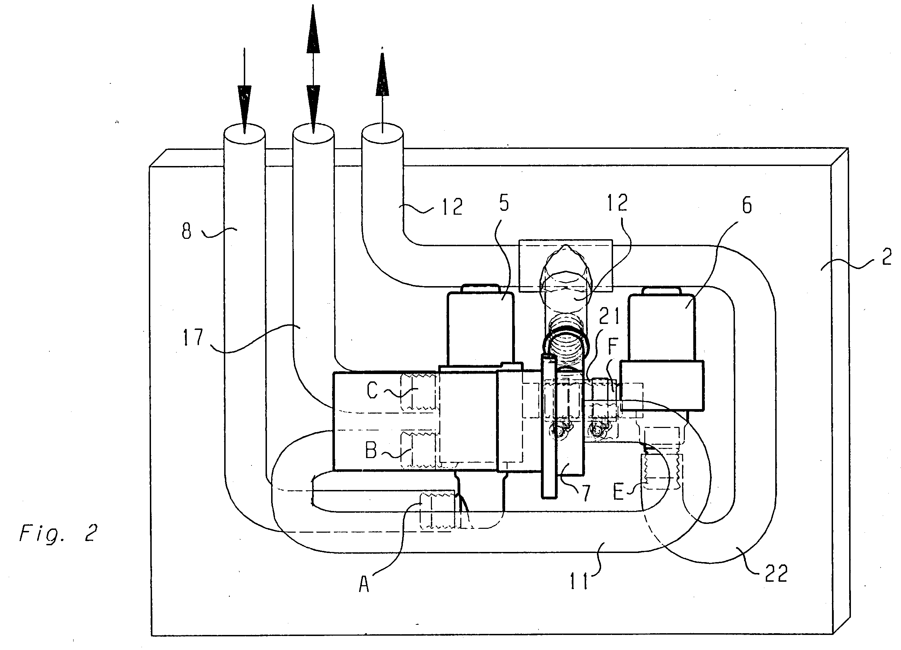

Fig. 2 zeigt schematisiert eine konkrete bauliche Anordnung der einzelnen Aggregate auf dem Aggregateträger 2 sowie der drei Leitungen, die die Aggregate auf dem Aggregateträger 2 mit dem Heizungskreislauf verbinden. Hierbei sind gleiche Bauteile mit gleichen Bezugsziffern wie in Fig. 1 bezeichnet. Wie aus dieser Abbildung ersichtlich ist, kann ein sehr kompakter Aufbau erzielt werden mit relativ kurzen Leitungsverbindungen.

Bei der gezeigten Anordnung liegt die Umwälzpumpe 7 vor dem Ventil 5, das dadurch teilweise verdeckt wird. Benachbart zum Ventil 5 ist das Ventil 6 angeordnet. Die Leitung 21 mündet hier direkt in dem Ventil 5, das deshalb so aufgebaut ist, daS ein direkter Dampfablaß zur Leitung 17 gewährleistet ist. Das Rückschlagventil 10 ist hier in dem Ventil 5 integriert.

Selbstverständlich ist es möglich, die elektrischen Anschlüsse für die beiden Ventile und die Umwälzpumpe zusammenzufassen zu einem Zentralstecker, so daß neben den drei Leitungsanschlüssen nur noch ein weiterer Zentralstecker mit dem Aggregateträger 2 verbunden werden muß, um alle betriebsnotwendigen Anschlüsse herzustellen.

## Patentansprüche

1. Fahrzeugheizung für ein mit einer flüssigkeitsgekühlten Brennkraftmaschine (1) ausgerüstetes Fahrzeug, bestehend aus einem Heizungskreislauf mit einem in der Fahrgastzelle angeordneten flüssigkeitsdurchströmten Wärmetauscher (4), der über eine Zulaufleitung und eine Rücklaufleitung mit dem Kühlkreis der Brennkraftmaschine (1) verbunden ist, mit einem in der Zulaufleitung eingebauten 3-Wegeventil (5), an dessen dritten Anschluß ein Wärmespeicher (3) angeschlossen ist, dessen Auslaß mit der Rücklaufleitung verbunden ist, und mit einer in der Zulaufleitung - in Strömungsrichtung - hinter dem 3-Wegeventil (5) eingebauten, motorunabhängig antreibbaren Umwälzpumpe (7), auf deren Druckseite eine Bypass-Leitung (22) unter Zwischenschaltung eines 2-Wegeventils (6) zu dem Latentwärmespeicher (3) abzweigt,
dadurch gekennzeichnet, daß das 3-Wegeventil (5), das 2-Wegeventil (6) und die Umwälzpumpe (7) auf einem Aggregateträger (2) angeordnet sind.

2. Fahrzeugheizung nach Anspruch 1,
dadurch gekennzeichnet, daß die Bypass-Leitung (22) ebenfalls auf dem Aggregateträger (2) angeordnet ist.

3. Fahrzeugheizung nach einem der vorangegangenen Ansprüche,
dadurch gekennzeichnet, daß der Aggregateträger (2) außerhalb des Fahrgastraumes angeordnet ist.

4. Fahrzeugheizung nach einem der vorangegangenen Ansprüche,
dadurch gekennzeichnet, daß der Aggregateträger (2) in einem Radkasten des Fahrzeugs eingebaut ist.

5. Fahrzeugheizung nach einem der vorangegangenen Ansprüche,
dadurch gekennzeichnet, daß der Aggregateträger (2) an der Fahrzeug-Karosserie eingeklipst ist.

## Claims

1. Vehicle heating for a vehicle equipped with a liquid cooled combustion engine (1), comprising a heating circuit with a circulating liquid heat exchanger (4), which is connected to the cooling circuit of the combustion engine (1) by a supply line and a return line, with a 3-way valve (5) built into the supply line, to whose third connector a heat store (3) is connected whose outlet is connected to the return line, and with a circulating pump (7) driven independently from the engine in the supply line built in behind the 3-way valve (5) - in the direction of flow, on whose pressure side a bypass line (22) with the interposed connection of a 2-way valve (6) branches off to the latent heat store (3), characterised in that the 3-way valve (5), the 2-way valve (6) and the circulating pump (7) are arranged on an assembly carrier (2).

2. Vehicle heating according to Claim 1,
characterised in that the bypass line (22) is also arranged on the assembly carrier (2).

3. Vehicle heating according to one of the foregoing Claims,
characterised in that the assembly carrier (2) is arranged outside the passenger compartment.

4. Vehicle heating according to one of the foregoing Claims,
characterised in that the assembly carrier (2) is built into a wheel arch of the vehicle.

5. Vehicle heating according to one of the foregoing Claims,
characterised in that the assembly carrier (2) is clipped into the vehicle coachwork.

## Revendications

1. Chauffage de véhicule pour un véhicule équipé d'un moteur à comoustion interne (1) refroidi par un fluide, consistant en un circuit de chauffage avec un échangeur de chaleur (4) parcouru par le fluide et disposé dans l'habitacle des passagers, échangeur de chaleur (4) qui est relié par une conduite d'aller et une conduite de retour au circuit du moteur à combustion interne (1), avec un distributeur (5) à trois voies, monté dans la conduite d'aller, distributeur (5) à trois voies au troisième raccord duquel est raccordé un accumulateur de chaleur (3), dont la sortie est reliée à la conduite de retour, et avec une pompe de circulation (7), montée dans la conduite d'amenée - dans le sens de l'écoulement - derrière le distributeur (5) à trois voies, pompe de circulation (7) qui peut être entraînée indépendamment du moteur, et sur le côté sous pression de laquelle est branchée une conduite en dérivation (22), en interposant un distributeur (6) à deux voies, qui va à l'accumulateur de chaleur latente (3),
caractérisé en ce que
le distributeur (5) à trois voies, le distributeur (6) à deux voies et la pompe de circulation (7) sont disposés sur un support de sous-ensembles (2).

2. Chauffage de véhicule selon la revendication 1,
caractérisé en ce que
la conduite en dérivation (22) est également disposée sur le support de sous-ensembles (2).

3. Chauffage de véhicule selon l'une des revendications précédentes,
caractérisé en ce que
le support de sous-ensembles (2) est disposé en dehors de l'habitacle des passagers.

4. Chauffage de véhicule selon l'une des revendications précédentes,
caractérisé en ce que
le support de sous-ensembles (2) est monté dans un couvre-roue de véhicule.

5. Chauffage de véhicule selon l'une des revendications précédentes,
caractérisé en ce que
le support de sous-ensembles (2) est enclipsé sur la carrosserie du véhicule.
